# EUROPEAN PATENT SPECIFICATION

(11) **EP 3 809 051 B1**
(45) Date of publication and mention of the grant of the patent: **10.12.2025**
(21) Application number: 19202924.7
(22) Date of filing: 14.10.2019
(51) Int. Cl.: F24D 10/00

(54) **DISTRICT HEATING SYSTEM**
FERNWÄRMESYSTEM
SYSTÈME DE CHAUFFAGE URBAIN

(43) Date of publication of application: 21.04.2021
(73) Proprietor: Grundfos Holding A/S, 8850 Bjerringbro (DK)
(72) Inventor: BOHN, Heinz, 8850 Bjerringbro (DK)
(74) Representative: Patentanwälte Hemmer Lindfeld Frese Partnerschaft mbB

(56) References cited:
- WO-A1-99/08055
- CH-A5- 678 886
- DE-A1- 3 037 910
- GB-A- 2 440 281

## Description

The invention relates to a district heating system, as well as to a method for operating at least a part of a district heating system.

District heating systems have been counted as belonging to the state of the art for some time now. They serve for example for supplying buildings with room heat and warm water. The heat generation is mostly effected in a central manner for example by way of the waste heat of a power station being used or that of combined heating and power stations (cogeneration stations). It is also counted as belonging to the state of the art to operate thermal power stations with biomass which operate in cogeneration, in order herein on the one hand to produce electricity and on the other hand to utilise the dissipated heat which is otherwise not usable, for the delivery of heat of the district heating system. Groups of heat consumers such as for example detached houses, apartment buildings, schools, hospitals but also industrial facilities are mostly supplied via well-insulated distinct heating conduits which are mostly laid underground. The heat supply is effected in groups, typically in a star-like distribution. The heat transfer medium, typically water, is provided at a high temperature via a feed conduit which mostly feeds one, but in practise a multitude of district heating transfer stations (hereinafter called transfer stations for short), via which the heat transfer to the consumer units such as houses, apartments and the like is effected. The heat transfer medium after the release of a part of its heat in the transfer stations is led back again to the central heat generator via a return conduit, where it is heated and fed back into the feed conduit again.

Herein, it is counted as belonging to the state of the art to provide a mixing device between the feed conduit and the return conduit, parallel to the transfer station, via which device cooled heat transfer medium is admixed to the feed conduit from the return conduit, in order to control the temperature of the heat transfer medium which is fed to the transfer stations or to regulate (closed-loop control) it to a predefined value which is lower than the temperature of the heat transfer medium which arrives in the feed conduit.

In order to operate groups of consumers (transfer stations) for example for providing the heat for room heating in an energetically favourable manner, it is also counted as belonging to the state of the art to feed the returning heat transfer medium at least partly to a heat pump and then feed it again into the feed conduit, wherein the feeding is effected downstream of the feeding of the mixing device seen in the flow direction of the feed conduit. Herein, the part-flow which runs through the heat pump is set such that it reaches the desired feed temperature. The application of such a mostly electrically operated heat pump in such a district heating system can be economically and energetically favourable, in particular if electricity from regenerative energies is used.

Regarding the extent to which the application of such a heat pump is energetically favourable depends to a large extent on the temperature difference between the temperature in the return and the desired feed temperature. If the feed temperature is quite high (e.g. in winter), then the efficiency of the application of such a heat pump can be greatly compromised, since this temperature difference then increases, which has a negative effect on the efficiency (COP) of the heat pump.

CH 678 886 A5 discloses a domestic heating system with a feed conduit for feeding at least one heat transfer station with a heated heat-transfer medium and a return conduit for leading back the cooled heat transfer medium. A mixing valve mixes the heated heat-transfer medium and the cooled heat transfer medium. Further, heat-transfer medium heated by a heat source is fed through the mixing valve into the feed conduit.

Against this background, it is the object of the invention according to the application to design such a district heating system in an efficiency-increasing manner. Furthermore, a method for operating at least a part of a district heating system, said method permitting an efficiency increasing operation is to be created.

For achieving this object, the invention suggests a district heating system with the features which are specified in claim 1 as well as for achieving the part of this object with regard to the method suggests a method with the features which are specified in claim 5. Advantageous embodiments of the invention are specified in the dependent claims, the subsequent description and the drawings.

The district heating system according to the invention comprises a feed conduit for feeding at least one transfer station with a heated heat-transfer medium and a return conduit for leading back the cooled heat transfer medium which comes from the at least one transfer station. It further comprises a mixing device between the feed conduit and the return conduit and at least one heat pump which heats the heat transfer medium from the return conduit, said medium then being fed into the feed conduit. According to the invention, the heat transfer medium which comes from the at least one heat pump, seen in the flow direction of the feed conduit is fed into the feed conduit upstream of the mixing device, or is fed through the mixing device of the feed conduit.

The basic concept of the district heating system according to the invention is therefore for the feeding of the heat transfer medium which comes from the at least one heat pump not to take place downstream of the mixing device seen in the flow direction of the feed conduit, as in the state of the art, but to feed the medium into the feed conduit upstream of the mixing device or however to the mixing device, which is to say to feed this part of the heat transfer medium to the feed conduit via the mixing device. Therefore only slight changes in the pipework of the district heating system are necessary, in order to achieve the design according to the invention, which is a precondition for the at least one heat pump not having to heat a part of the cooled heat transfer medium which is located in the return, to the selected feed temperature (feed setpoint temperature), but being able to heat it to a temperature which typically lies therebelow and is energetically significantly more favourable for the operation of the heat pump. Due to the fact that the feeding of this heat transfer medium which comes from the at least one heat pump is effected into the feed conduit upstream of the mixing device, this medium can have a lower temperature than the feed setpoint temperature, wherein the temperature regulation (closed-loop control) adjusts this temperature by way of the mixing device. Alternatively, the feeding into the mixing device can be effected as is yet described in more detail further below.

The pipework of a part of the district heating system, in accordance with the invention, as specified above permits the implementation of the energetically favourable method according to the invention, for operating at least a part of the district heating system, concerning which a heated heat transfer medium is fed via a feed conduit to at least one transfer station and concerning which the heat transfer medium which is cooled in the at least one transfer station is led back in a return conduit, wherein at least a part of the led-back heat transfer medium is heated by way of a heat pump or a heat pump system and fed again to the feed conduit. According to the invention, the heating of the part of the led-back heat transfer medium by way of the heat pump or the heat pump system is effected to a lower temperature than the temperature which initially prevails in the feed conduit which is to say the feed setpoint temperature, in a manner such that the heat pump or the heat pump system is operated in an energetically favourable manner. Herein, the temperature selection is advantageously effected such that a maximal COP (coefficient of performance) of the heat pump or of the heat pump system is achieved.

A feed temperature in the context of the invention is to be understood as the temperature, at which the heat transfer medium comes out of the feed of the district heating system. This feed temperature is mostly significantly higher than the temperature which is necessary for example for feeding into a transfer station, in which heat is transferred from the district heating system via a heat exchanger to a consumer, for example a detached house, an apartment block or the like. As a rule this feed temperature is therefore significantly higher than the feed setpoint temperature, which is to say the temperature, at which one feeds into the at least one transfer station, for example of a detached house. This feed setpoint temperature is regulated in an intermediate station, typically by way of the mixing device, via which a part of the cooled heat transfer medium which comes from the at least one transfer station is fed as a part-flow to the feed conduit for the purpose of the temperature regulation.

Independently of whether the feeding of the heat transfer medium coming from the heat pump is effected directly into the feed conduit or into the feed conduit via the mixing device, the mixing device is equipped with a speed-controllable centrifugal pump and comprises a check valve which prevents a backflow from the feed conduit into the return conduit via the mixing device.

Herein, the speed control of the centrifugal pump is advantageously used to regulate (closed-loop control) the feed setpoint temperature. Advantageously, a part of the heat transfer medium which comes from the return conduit or the heat transfer medium which comes from the at least one heat pump or the heat pump system is delivered into the feed conduit via this at least one centrifugal pump, wherein the speed of the centrifugal pump is controlled in dependence on the temperature in the feed conduit between the injection location of the mixing device and the transfer station. The feed setpoint temperature is adjusted in this manner, preferably regulated amid the application of a suitable regulation.

The at least one centrifugal pump comprises an electronic frequency converter for the speed control, said frequency converter being arranged in an electronics housing next to or on the pump, and the control electronics of regulation are herein likewise arranged in this electronics housing. These control electronics can preferably form part of the frequency converter electronics, so that the closed-loop control can be effected by way of the frequency converter electronics. Such types of centrifugal pumps which are controlled by frequency converter are counted as belonging to the state of the art, as individual pumps as well as double pumps or pump groups with a central regulation.

Advantageously, the at least one heat pump is part of a heat pump system, in which several heat pumps are connected in parallel and/or in series, wherein the heat pump system is designed for heating heat transfer medium from the return conduit and injecting it into the feed conduit. Such a heat pump system can operate in a highly effective manner, since a greater temperature difference can possibly be achieved by way of a multi-stage arrangement without worsening the efficiency.

Irrespective of whether the control and regulation electronics are part of the frequency converter electronics of a centrifugal pump or are designed as separate control and regulation electronics for a centrifugal pump for a district heating system, for the application according to the invention it is advantageous to provide control connections for two or more speed-controllable centrifugal pumps, in order to possibly activate several centrifugal pumps in a direct manner and to be able to integrate them into the system in an energetically favourable manner. Herein, it is advantageous to provide a connection for at least one temperature sensor which is provided for detecting a feed temperature (between the injection location and transfer location) as well as furthermore a connection for the control of the at least one heat pump. The control and regulation electronics are herein designed such that they comprise all components which are necessary for the control of the at least two speed-controllable centrifugal pumps as well as of the at least one heat pump, wherein the connection for the at least one temperature sensor can detect at least the feed temperature, and a closed control-loop can herewith be formed without further additional components.

Herein, a heated heat transfer medium is fed to at least one transfer station via a feed conduit, and the heat transfer medium which is cooled in the transfer stations is led back in a return conduit. Herein, a part of the led-back heat transfer medium is heated by way of at least one heat pump or a heat pump system and is fed again to the feed conduit in a direct manner, thus whilst bypassing the central heat source or heat sources of the district heating system. A part of this delivery flow which is branched from the return conduit is heated to a lower temperature than that which initially prevails in the feed conduit, in a manner such that the heat pump or the heat pump system is operated in an energetically favourable manner. This lower temperature relates to the temperature, at which the heat transfer medium is provided by the district heating system. This temperature is also lower or at least the same as the feed setpoint temperature which is to say the temperature, at which the heat transfer medium is fed to the at least one transfer station. The method according to the invention is herein designed such that by way of the mixing device, a part of the heat transfer medium is fed out of the return conduit directly to the feed conduit again and another part of the heat transfer medium is fed from the return conduit to the heat pump or to the heat pump system or to the heat pump system and is not fed to the feed conduit again until having run through the heat pump or the heat pump system. Herein, the temperature of the heat transfer medium in the feed conduit in the region between the injection location of the mixing device and the transfer station is adjusted by control of the part-flows by way of the regulation.

The regulation is advantageously effected such that firstly the part-flow which comes from the heat pump or the heat pump system is fed up to its maximum and only afterwards is a part-flow fed from the mixing device. The part-flows are therefore controlled by speed variation of the pumps such that firstly the part-flow which comes from the heat pump or from the heat pump system is admixed for reaching the feed setpoint temperature and only when this part-flow cannot be increased any further is a part-flow from the mixing device fed. By way of this method it is ensured that the heat pump or the heat pump system can be operated in an energetically favourable manner. Since the initially prevailing heat transfer medium always has a significantly higher temperature than the feed setpoint temperature, a first lowering is firstly effected whilst utilising the part-flow of heat transfer medium which comes from the heat pump or from the heat pump system and only when this has been completely used up, a further lowering by way of the part-flow into the feed conduit, said part flow being branched from the return conduit.

Herein, it is advantageous to operate the heat pump or the heat pump system with a maximal heating power. This is particularly advantageous and at the same time is simple with regard to control technology since the heat pump or the heat pump system requires no regulation.

According to an alternative design of the method according to the invention, the heat pump or the heat pump system is operated with a variable heating power, and specifically according to the excess electrically energy which is available from regenerative energy sources. Such a design is particularly energetically favourable, since it is herewith ensured that the heat pump or the heat pump system is only applied when excesses are present on the part of the regenerative energy sources, which could not otherwise be utilised or only with a poor efficiency. Energetic and economical demands can overlap here.

The invention is hereinafter explained in more detail by way of embodiment examples which are represented in the drawings: There are shown in:
- Figure 1: in a greatly simplified schematic representation, the construction of a district heating system,
- Figure 2: in a greatly simplified representation, the construction of an intermediate station according to the state of the art,
- Figure 3: the construction of an intermediate station according to the invention in a first embodiment variant and
- Figure 4: the construction of an intermediate station according to the invention in a second embodiment variant.

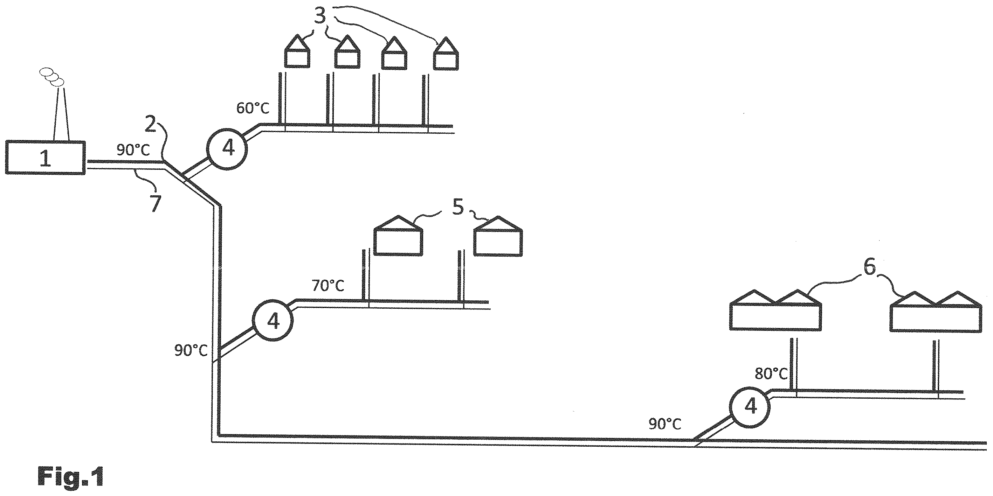

The basic construction of a district heating system is represented in Figure 1. Herein, a heating and power station 1 symbolically represents a heat source, typically from a cogeneration facility, such as for example a power station. This heating and power station 1 in a feed conduit 2 provides a heat transfer medium in the form of water at a temperature of for example 90°C.

The consumers of this district heating system are only represented symbolically in Figure 1. The consumers 3 are detached houses which require the heat for heating and for producing warm water. These smaller houses 3 however do not require a feed temperature of 90°C, but a feed temperature for example of 60°C which is to be set at an intermediate station 4 is sufficient here. Consumers of larger houses such as schools, hospitals and the like are characterised at 5, wherein these although having a greater thermal requirement, likewise do not need a feed temperature of 90°C but can be adequately supplied for example by an entry temperature of 70°C. Finally, industrial consumers which have a greater heating requirement but for which an entry temperature of 80°C is sufficient are characterised at 6. Each of these consumer groups 3, 5, and 6 is connected to the feed conduit 2 of the heating and power station 1 via an intermediate station 4, in which a feed setpoint temperature (entry temperature) which is specified in accordance with the aforementioned temperatures is achieved by way of admixing colder heat transfer medium.

The heat transfer medium is led in the circuit, which is to say is provided from the heating and power station 1 by the feed conduit 2 at a feed temperature of 90°C, is regulated down to the selected feed setpoint temperature in the intermediate station 4 by way of admixing colder heat transfer medium, wherein after removal of heat from the heat transfer medium this is led back again to the heating and power station 1 via a return conduit 7 for renewed heating.

In the intermediate stations 4, the high temperature of the feed conduit 2 initially here of 90°C is regulated down to an energetically more favourable level, the respective feed setpoint temperature, in order to then be fed to one or more consumers 3, 5 and 6 which take the heat via a transfer station 13 and lead the heat transfer medium back to the return conduit 7 and thus to the heating and power station 1.

The transfer stations 13 which are represented in the figures symbolically represent one or more transfer stations 13, via which thermal energy is taken.

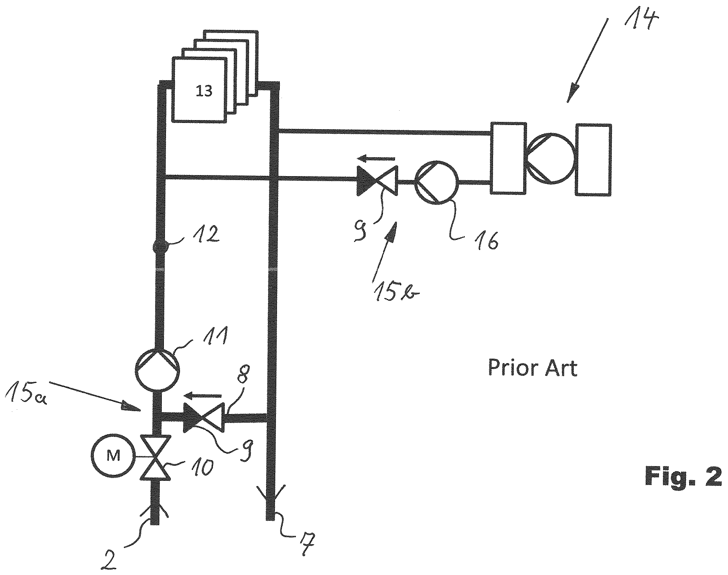

In order to regulate the heat transfer medium which comes from the feed conduit 2 of the heating and power station 1 to the desired feed setpoint temperature, it is counted as belonging to the state of the art as is represented in Figure 2 to provide a mixing device 15a in an intermediate station, with which heating device cooled heat transfer medium is fed from the return conduit via a bypass 8 with a check valve 9 which is located therein, again to the feed conduit, in which a throttle valve 9 as well as a pump 11 are arranged. The pump 11 runs at a constant speed and the motor-driven throttle valve 10 is herein integrated into a regulation which controls the valve position in dependence on the temperature at a temperatures sensor 12, such that the heat transfer medium which is fed to the transfer station 13 has the selected feed setpoint temperature. Here, the transfer station 13 is representative of a possible plurality of transfer stations as are present for example in the four small houses 3 which are symbolically represented in Figure 1 or in Figure 1 are assigned to large houses 5 or the industrial consumers 6.

It is counted as belonging to the state of the art to branch a part-flow of the heat transfer medium which is led from the transfer station 13 into the return conduit 7, to heat it by way of a heat pump 14 and to feed it into the feed conduit 2 again by way of an injection device 15b with a centrifugal pump 16 and with a check valve 9. Since the injection is effected downstream of the mixing device 15a seen in the flow direction of the feed conduit 2, this must be injected at the feed setpoint temperature in order not to influence the feed temperature with respect to the setpoint temperature. The heat pump 14 is therefore always to be set such that the heat transfer medium is heated to the feed setpoint temperature.

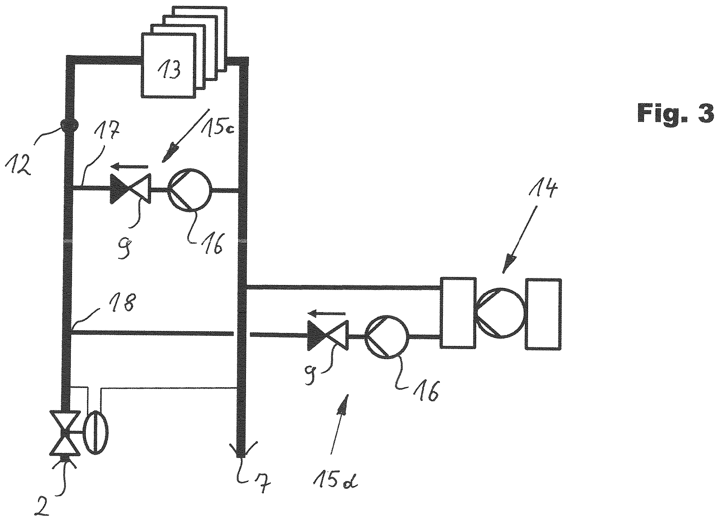

Concerning the embodiment according to the invention of an intermediate station 4 according to Figure 3, a mixing device 15c with a pump 16 and with a check valve 9 are arranged in a bypass 17 between the feed conduit 2 and the return conduit 7, and specifically parallel to the transfer station 13. Cooled heat transfer medium which comes from the transfer station 13 is admixed from the return conduit 7 into the feed conduit 2 via this mixing device as a part-flow, in order to set a feed setpoint temperature of for example 60°C which is lowered with respect to the feed temperature of the heating and power station 1. A temperature sensor is provided for this, said temperature sensor being integrated with the pump 16 into a regulation which controls the speed of the pump 16 in dependence on the temperature which is detected by the temperature sensor 12, in order to set the desired feed setpoint temperature.

With this embodiment according to Figure 3, a heat pump 14 is also provided, said heat pump heating a part-flow from the return conduit 7, in order to then admix this by way of a further mixing device 15d which comprises a pump 16 and a check valve 9 and which runs out into the feed conduit 2 at a location 18 which seen in the flow direction of the feed conduit 2 is arranged upstream of the run-out of the bypass 17. By way of this arrangement, the heat pump 14 can be operated in an energetically favourable manner independently of the feed setpoint temperature since it does not need to lift the heat transfer medium from the return conduit 7 to the temperature level of the feed setpoint temperature, but only to the temperature level, at which it operates in an energetically favourable manner, which is to say with a high COP value. Herein, the heat pump 14 is advantageously operated preferably at maximum power. The temperature regulation is herein designed such that the feed setpoint temperature is achieved by way of the actual temperature being detected by the temperature sensor 12 and the pump 16 of the mixing device 15d which is arranged downstream of the heat pump 14 being activated into continuing to deliver which is to say with an increasing speed, as long as the feed setpoint temperature is not yet reached, but is yet exceeded. Only when this regulation has reached the end, which is to say that the complete part-flow which is heated by the heat pump 14 at full power is fed into the feed conduit in the run-out 18, is the mixing device 15c which lies in the bypass 17 activated with the pump which is likewise speed-controllable, unit the feed setpoint temperature is reached.

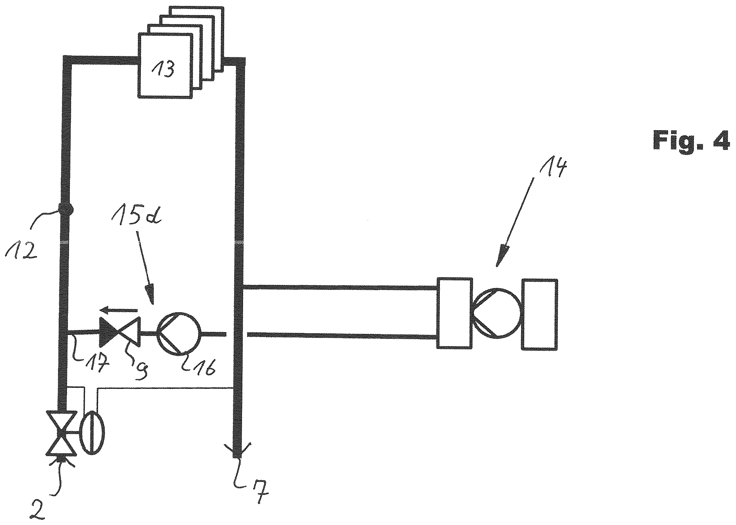

With the arrangement according to Figure 4, the heat pump 14 feeds directly in the mixing device 15d of the bypass 17.

With this arrangement, a part-flow from the return conduit 7 always runs through the heat pump 14 via the mixing device 15d of the bypass 17 into the feed conduit 2, independently of whether the heat pump 14 is in operation or not.

The operation of the intermediate station is described by way of the afore-described embodiment examples, said operation being assigned to one or more consumers which is to say transfer stations 13. It is to be understood that an intermediate station which operates according to this principle can also be assigned directly for example to part of a transfer station or to one or more consumers. This is dependent of the size of the consumer and of the energy carriers which are available for operation of the heat pump.

### List of reference numerals

- 1: heating and power station
- 2: feed conduit
- 3: smaller houses (consumers)
- 4: intermediate station
- 5: larger houses (consumers)
- 6: industrial consumers
- 7: return conduit
- 8: bypass
- 9: check valve
- 10: throttle valve
- 11: pump
- 12: temperature sensor
- 13: transfer station
- 14: heat pump
- 15a: mixing pump
- 15b: mixing device/injection device in Figure 2
- 15c, 15d: mixing device / injection device in the Figures 3 and 4
- 16: speed-regulated pump
- 17: bypass
- 18: run-out

## Claims

1. A district heating system with a feed conduit (2) for feeding at least one transfer station (13) with a heated heat transfer medium and with a return conduit (7) for leading back the cooled heat transfer medium which comes from the at least one transfer station (13), with a mixing device (15) between the feed conduit and the return conduit and with at least one heat pump (14) which is arranged for heating heat transfer medium from the return conduit (7), said medium then being fed into the feed conduit (2), the district heating system being arranged such that the heat transfer medium which comes from the at least one heat pump (14), seen in the flow direction of the feed conduit (2) is fed into the feed conduit upstream of the mixing device (15c), or is fed through the mixing device (15d) of the feed conduit, the mixing device (15) comprising at least one speed-controllable centrifugal pump (16), a check valve (9) and a regulation, said regulation controlling the speed of the centrifugal pump (16) for the regulation of the temperature in the feed conduit (2) between the injection location of the mixing device (15c) and the transfer station (13), the at least one centrifugal pump (16) comprises an electronic frequency converter for the speed control, said frequency converter being arranged in an electronics housing in or on the pump, and the regulation electronics of the regulation are arranged in the electronics housing.

2. A district heating system according to claim 1, wherein the regulation electronics of the regulation form part of the frequency converter electronics.

3. A district heating system according to one of the proceeding claims, wherein the at least one speed-controllable centrifugal pump (16) is configured for delivering heat transfer medium from the return conduit (7) or from the at least one heat pump (14) into the feed conduit (2) and configured such that the speed of the centrifugal pump (16) is controllable in dependence on the temperature in the feed conduit (2) between the injection location of the mixing device (15c) and the transfer station (13).

4. A district heating system according to one of the preceding claims, wherein the at least one heat pump (14) is part of a heat pump system, in which several heat pumps are connected in parallel and/or in series, wherein the heat pump system is designed for heating heat transfer medium from the return conduit (7) and injection into the feed conduit (2).

5. A method for operating at least a part of a district heating system, concerning which a heated heat transfer medium is fed to at least one transfer station (13) via a feed conduit (2), and concerning which the heat transfer medium which is cooled in the at least one transfer station (13) is led back in a return conduit (7), wherein at least a part of the led-back heat transfer medium is heated by way of at least one heat pump (14) or a heat pump system and fed again to the feed conduit (2), wherein the heating of the part of the led-back heat transfer medium by way of the heat pump (14) or of the heat pump system is effected to a lower temperature than that prevailing in the feed conduit (2), in a manner such that the heat pump (14) or the heat pump system is operated in an energetically favourable manner, wherein a part of the heat transfer medium is fed again to the feed conduit (2) from the return conduit (7) by way of a mixing device (15c) and that a part of the heat transfer medium is fed from the return conduit (7) to the heat pump (14) or to the heat pump system and then again to the feed conduit (2), wherein the temperature of the heat transfer medium in the feed conduit (2) between the injection location of the mixing device (15c) and the transfer station (13) is set by way of the control of the part-flows by way of a regulation, wherein the regulation is effected such that firstly the part-flow which comes from the heat pump or the heat pump system is fed up to its maximum and afterwards the part flow from the mixing device (15c) is fed.

## Patentansprüche

1. Fernheizungsanlage mit einer Speiseleitung (2) zum Speisen mindestens einer Übertragungsstation (13) mit einem erwärmten Wärmeübertragungsmedium und mit einer Rückführungsleitung (7) zum Zurückleiten des abgekühlten Wärmeübertragungsmediums, das von der mindestens einen Übertragungsstation (13) kommt, mit einer Mischvorrichtung (15) zwischen der Speiseleitung und der Rückführungsleitung und mit mindestens einer Wärmepumpe (14), die zum Erwärmen von Wärmeübertragungsmedium von der Rückführungsleitung (7) angeordnet ist, wobei das Medium dann in die Speiseleitung (2) eingespeist wird, wobei die Fernheizungsanlage derart angeordnet ist, dass das Wärmeübertragungsmedium, das von der mindestens einen Wärmepumpe (14) kommt, gesehen in der Strömungsrichtung der Speiseleitung (2), stromaufwärts von der Mischvorrichtung (15c) in die Speiseleitung eingespeist wird oder durch die Mischvorrichtung (15d) der Speiseleitung eingespeist wird, wobei die Mischvorrichtung (15) mindestens eine geschwindigkeitsregelbare Zentrifugalpumpe (16), ein Rückschlagventil (9) und eine Regulierung umfasst, wobei die Regulierung die Geschwindigkeit der Zentrifugalpumpe (16) regelt, zum Regulieren der Temperatur in der Speiseleitung (2) zwischen der Einspritzungsstelle der Mischvorrichtung (15c) und der Übertragungsstation (13), wobei die mindestens eine Zentrifugalpumpe (16) einen elektronischen Frequenzumformer für die Geschwindigkeitsregelung umfasst, wobei der Frequenzumformer in einem Elektronikgehäuse in oder an der Pumpe angeordnet ist und die Regulierungselektronik der Regulierung in dem Elektronikgehäuse angeordnet ist.

2. Fernheizungsanlage nach Anspruch 1, wobei die Regulierungselektronik der Regulierung einen Teil der Frequenzumformer-Elektronik bildet.

3. Fernheizungsanlage nach einem der vorhergehenden Ansprüche, wobei die mindestens eine geschwindigkeitsregelbare Zentrifugalpumpe (16) zum Befördern von Wärmeübertragungsmedium aus der Rückführungsleitung (7) oder aus der mindestens einen Wärmepumpe (14) in die Speiseleitung (2) konfiguriert ist und derart konfiguriert ist, dass die Geschwindigkeit der Zentrifugalpumpe (16) in Abhängigkeit von der Temperatur in der Speiseleitung (2) zwischen der Einspritzungsstelle der Mischvorrichtung (15c) und der Übertragungsstation (13) regelbar ist.

4. Fernheizungsanlage nach einem der vorhergehenden Ansprüche, wobei die mindestens eine Wärmepumpe (14) Teil einer Wärmepumpenanlage ist, in der mehrere Wärmepumpen parallel und/oder in Reihe verbunden sind, wobei die Wärmepumpenanlage zum Erwärmen von Wärmeübertragungsmedium aus der Rückführungsleitung (7) und Einspritzen in die Speiseleitung (2) ausgelegt ist.

5. Verfahren zum Betrieben zumindest eines Teils einer Fernheizungsanlage, in Bezug auf die ein erwärmtes Wärmeübertragungsmedium über eine Speiseleitung (2) zu mindestens einer Übertragungsstation (13) transportiert wird und in Bezug auf die das Wärmeübertragungsmedium, das in der mindestens einen Übertragungsstation (13) abgekühlt wird, in einer Rückführungsleitung (7) zurückgeleitet wird, wobei zumindest ein Teil des zurückgeleiteten Wärmeübertragungsmediums mit Hilfe mindestens einer Wärmepumpe (14) oder einer Wärmepumpenanlage erwärmt und wieder zu der Speiseleitung (2) transportiert wird, wobei das Erwärmen des zurückgeleiteten Wärmeübertragungsmediums mit Hilfe der Wärmepumpe (14) oder der Wärmepumpenanlage bis zu einer niedrigeren Temperatur als derjenigen, die in der Speiseleitung (2) vorherrscht, bewirkt wird, auf eine solche Weise, dass die Wärmepumpe (14) oder die Wärmepumpenanlage auf eine energetisch vorteilhafte Weise betrieben wird, wobei ein Teil des Wärmeübertragungsmediums mit Hilfe einer Mischvorrichtung (15c) wieder von der Rückführungsleitung (7) zu der Speiseleitung (2) transportiert wird, und dass ein Teil des Wärmeübertragungsmediums von der Rückführungsleitung (7) zu der Wärmepumpe (14) oder der Wärmepumpenanlage und danach wieder zu der Speiseleitung (2) transportiert wird, wobei die Temperatur des Wärmeübertragungsmediums in der Speiseleitung (2) zwischen der Einspritzungsstelle der Mischvorrichtung (15c) und der Übertragungsstation (13) mit Hilfe der Regelung der Teilströme mit Hilfe einer Regulierung eingestellt wird, wobei die Regulierung derart bewirkt wird, dass zuerst der Teilstrom, der von der Wärmepumpe oder der Wärmepumpenanlage kommt, bis zu seinem Maximum eingespeist wird und danach der Teilstrom von der Mischvorrichtung (15c) eingespeist wird.

## Revendications

1. Système de chauffage urbain avec un conduit d'alimentation (2) pour distribuer un milieu de transfert de chaleur chauffé à au moins une station de transfert (13) et avec un conduit de retour (7) pour retourner le milieu de transfert de chaleur refroidi provenant de l'au moins une station de transfert (13), avec un dispositif de mélange (15) entre le conduit d'alimentation et le conduit de retour et avec au moins une pompe à chaleur (14) qui est agencée pour chauffer un milieu de transfert de chaleur provenant du conduit de retour (7), ledit milieu étant ensuite distribué dans le conduit d'alimentation (2), le système de chauffage urbain étant agencé de sorte que le milieu de transfert de chaleur provenant de l'au moins une pompe à chaleur (14), en vue dans la direction d'écoulement du conduit d'alimentation (2), soit distribué dans le conduit d'alimentation en amont du dispositif de mélange (15c), ou soit distribué à travers le dispositif de mélange (15d) du conduit d'alimentation, le dispositif de mélange (15) comprenant au moins une pompe centrifuge à vitesse pouvant être commandée (16), un clapet antiretour (9) et une régulation, ladite régulation commandant la vitesse de la pompe centrifuge (16) pour la régulation de la température dans le conduit d'alimentation (2) entre l'emplacement d'injection du dispositif de mélange (15c) et la station de transfert (13), l'au moins une pompe centrifuge (16) comprend un convertisseur de fréquence électronique pour la commande de vitesse, ledit convertisseur de fréquence étant agencé dans un boîtier de composants électroniques dans ou sur la pompe, et les composants électroniques de régulation de la régulation sont agencés dans le boîtier de composants électroniques.

2. Système de chauffage urbain selon la revendication 1, dans lequel les composants électroniques de régulation de la régulation font partie des composants électroniques de convertisseur de fréquence.

3. Système de chauffage urbain selon l'une des revendications précédentes, dans lequel l'au moins une pompe centrifuge à vitesse pouvant être commandée (16) est configurée pour amener un milieu de transfert de chaleur provenant du conduit de retour (7) ou provenant de l'au moins une pompe à chaleur (14) dans le conduit d'alimentation (2) et configurée de sorte que la vitesse de la pompe centrifuge (16) puisse être commandée en fonction de la température dans le conduit d'alimentation (2) entre l'emplacement d'injection du dispositif de mélange (15c) et la station de transfert (13).

4. Système de chauffage urbain selon l'une des revendications précédentes, dans lequel l'au moins une pompe à chaleur (14) fait partie d'un système de pompes à chaleur, dans lequel plusieurs pompes à chaleur sont reliées en parallèle et/ou en série, dans lequel le système de pompes à chaleur est conçu pour chauffer un milieu de transfert de chaleur provenant du conduit de retour (7) et pour l'injecter dans le conduit d'alimentation (2).

5. Procédé de fonctionnement d'au moins une partie d'un système de chauffage urbain dans lequel un milieu de transfert de chaleur chauffé est distribué à au moins une station de transfert (13) via un conduit d'alimentation (2) et le milieu de transfert de chaleur refroidi dans l'au moins une station de transfert (13) est retourné dans un conduit de retour (7), dans lequel au moins une partie du milieu de transfert de chaleur retourné est chauffée au moyen d'au moins une pompe à chaleur (14) ou d'un système de pompes à chaleur et est retournée dans le conduit d'alimentation (2), dans lequel le chauffage de la partie du milieu de transfert de chaleur retourné au moyen de la pompe à chaleur (14) ou du système de pompes à chaleur est réalisé à une température inférieure à la température prévalant dans le conduit d'alimentation (2), de sorte que la pompe à chaleur (14) ou le système de pompes à chaleur fonctionne d'une manière énergétiquement favorable, dans lequel une partie du milieu de transfert de chaleur est retournée dans le conduit d'alimentation (2) depuis le conduit de retour (7) au moyen d'un dispositif de mélange (15c) et une partie du milieu de transfert de chaleur est distribuée du conduit de retour (7) à la pompe à chaleur (14) ou au système de pompes à chaleur puis à nouveau au conduit d'alimentation (2), dans lequel la température du milieu de transfert de chaleur dans le conduit d'alimentation (2) entre l'emplacement d'injection du dispositif de mélange (15c) et la station de transfert (13) est définie au moyen de la commande des écoulements partiels par le biais d'une régulation, dans lequel la régulation est réalisée de sorte que le flux partiel provenant de la pompe à chaleur ou du système de pompes à chaleur soit d'abord entièrement distribué puis le flux partiel provenant du dispositif de mélange (15c) soit distribué.
